# EUROPÄISCHE PATENTSCHRIFT

(11) **EP 3 386 714 B1**
(45) Veröffentlichungstag und Bekanntmachung des Hinweises auf die Patenterteilung: **05.08.2020**
(21) Anmeldenummer: 17720360.1
(22) Anmeldetag: 24.04.2017
(51) Int. Cl.: B29C 49/06, B29B 11/14, B65D 41/00

(54) **VERFAHREN ZUM HERSTELLEN EINES SCHRAUB- ODER STECKVERSCHLUSSES**
METHOD FOR PRODUCING A SCREW OR PLUG-IN CONNECTION
PROCÉDÉ DE FABRICATION D'UN BOUCHON À VISSER OU À ENCLIQUETER

(30) Priorität: 17.05.2016 DE 102016005988
(43) Veröffentlichungstag der Anmeldung: 17.10.2018
(73) Patentinhaber: Georg Menshen GmbH & Co. KG, 57413 Finnentrop (DE)
(72) Erfinder: PRICE, Richard, Whitchurch Cardiff CF14 2BS (GB); GIERSE, Tim, 57439 Attendorn (DE); WOMMELSDORF, Jan, 57399 Kirchundem (DE); RÖMER, Frank, 57413 Finnentrop (DE)
(74) Vertreter: Cohausz Hannig Borkowski Wißgott
(86) Internationale Anmeldenummer: PCT/EP2017/000508
(87) Internationale Veröffentlichungsnummer: WO 2017/198324

(56) Entgegenhaltungen:
- EP-A1- 0 405 683
- DE-A1-102011 011 784
- GB-A- 1 003 019
- US-A1- 2014 144 869
- US-A1- 2014 144 950

## Beschreibung

Die Erfindung betrifft ein Verfahren zum Herstellen eines Schraub- oder Steckverschlusses aus Kunststoff zum Verschließen von Behältern, wobei der Verschlusskörper einen Außenmantel aufweist, der an seiner Oberseite verschlossen ist.

Es sind die unterschiedlichsten Schraubverschlüsse zum Verschließen der oberen Öffnung von Behältern und Flaschen bekannt. In der Regel sind sie kappenförmig und weisen einen zylindrischen Außenmantel auf, auf dessen Innenseite sich ein Innengewinde befindet. Auch ist es bekannt, Schraubverschlüsse doppelwandig herzustellen, wobei eine koaxiale zylindrische Innenwand das Innengewinde aufweist, mit dem der Verschluss auf das Außengewinde des Behälters/der Flasche aufgeschraubt wird.

Darüber hinaus sind Schraubverschlüsse bekannt, die am Außenmantel außen einen ringförmigen angeformten Kragen besitzen, der ein Innengewinde aufweist, wobei der Kragen meistens im unteren oder mittleren Bereich der Höhe des Verschlusses angeordnet ist. Ein solcher Verschluss wird häufig auch als Messbecher verwendet, nachdem er vom Behälter abgeschraubt worden ist.

Ist bei solchen Verschlüssen gewünscht, dass der obere Bereich gegenüber dem unteren Bereich erweitert ist, so entstehen erhebliche Entformungsprobleme bei der Herstellung im Kunststoffspritzguss. Es ist aber bekannt, eine geringfügige Erweiterung durch einen Einfallkern oder Faltkern im Kunststoffspritzgussverfahren zu verwenden, wie dies die DE 102011011784 B4 und die DE 102007039368 B4 zeigen.

Durch die Patentanmeldung US 2014/0144950 A1 ist ein Herstellungsverfahren für Schraubverschlüsse bekannt, bei dem zuerst ein Vorformteil mit einem ein Gewinde aufweisendem radial äußeren Kragen und einer zentralen Kappe durch Kunststoffspritzguss hergestellt wird und anschließend die zentrale Kappe durch Blassformung umgeformt wird. Ein vergleichbares Verfahren wird durch die Patentanmeldung US 2014/0144869 A1 beschrieben. Die Patentanmeldung GB 1 003 019 A beschreibt ein Verfahren zur Herstellung eines Verschlusskörpers, wobei eine durch Kunststoffspritzguss hergestellt zentrale Kappe durch Blassformung umgeformt wird. Durch die Patentanmeldung EP 0405 683 A1 wird ein Verschlusskörper offenbart, der durch Kunststoffspritzguss und anschließendes Blassformen hergestellt ist. Ein Werkzeug zum Spritzen von Gegenständen mit Hinterschnitten ist durch die Patentanmeldung DE 10 2011 011 784 A1 offenbart.

Aufgabe der Erfindung ist es, ein technisch einfaches Verfahren zum Herstellen von Schraub- und Steckverschlüssen zu schaffen, deren Innenbereich insbesondere deren oberer Innenbereich erheblich erweitert ist und damit ein erheblich vergrößertes Innenvolumen besitzt. Auch soll eine wesentliche Ausweiterung der Gestaltungsmöglichkeiten der Außenform bei einfacher Herstellung ermöglicht sein.

Diese Aufgaben werden erfindungsgemäß mit einem Verfahren nach Anspruch 1 gelöst.

Durch dieses Verfahren kann das zuerst im Kunststoffspritzgussverfahren hergestellte zylindrische Hohlteil als Vorformling hergestellt insbesondere leicht entformt werden und danach wird das Innere des Hohlteils durch Eindrücken eines Gases insbesondere von Luft aufgeblasen, um dadurch die unterschiedlichsten äußeren Designformen zu ermöglichen. So kann die Außenform insbesondere im oberen Bereich z. B. mehr oder wenig eckig oder quadratisch geformt sein, um z. B. eine bessere Haptik zu erreichen. Das Verfahren hat zudem den Vorteil, dass auf einfache Weise ein größeres Füllvolumen des Verschlusses bei kleinerer oder gleicher Bauhöhe erreicht werden kann.

Alternativ oder zusätzlich wird die Erweiterung auch dadurch erreicht, dass am Außenmantel ein Unterdruck angelegt wird. Durch einen außen angelegten Unterdruck wird eine besonders gleichmäßige Erweiterung erreicht.

Vorzugsweise wird vorgeschlagen, dass der Außenmantel des Vorformlings zylindrisch ist. Alternativ wird vorgeschlagen, dass der Außenmantel des Vorformlings sich nach unten oder nach oben hin konisch verjüngt und hierbei einen geraden Kreiskegelstumpf bildet, bei einer Verjüngung nach oben mit einem Winkel zwischen 0 und 30 Grad und bei einer Verjüngung nach unten mit einem Winkel zwischen 0 und 10 Grad.

Besonders vorteilhaft ist es, wenn nach dem Formen insbesondere nach dem Entformen ein oberer Bereich des Außenmantels soweit erweitert wird, dass ein Innendurchmesser des oberen Bereichs größer ist als der Innendurchmesser eines unterhalb des obereichen Bereichs befindlichen unteren Bereichs.

Vorzugsweise wird vorgeschlagen, dass das Entformen ein Zwangsentformen ist, bei dem während des Entfernens des Kerns der noch weiche Kunststoff des Außenmantels nachgibt.

Eine weitere Verbesserung des Verfahrens wird erreicht, wenn im Kunststoffspritzgussverfahren der oberhalb des Kragens befindliche Bereich durch einen Einfallkern oder Faltkern so weit erweitert wird, dass sein Innendurchmesser größer ist als der Innendurchmesser des unterhalb des Kragens befindlichen Bereichs und dass danach der oberhalb des Kragens befindliche Bereich durch Aufblasen und/oder äußerem Unterdruck darüber hinaus erweitert wird.

Ausführungsbeispiele der Erfindung sind in den Zeichnungen dargestellt und werden im Folgenden näher beschrieben. Es zeigen
- Fig. 1: einen axialen senkrechten Schnitt durch den Vorformling eines Schraubverschlusses nach den Fig. 2 und 3,
- Fig. 2: einen Schraubverschluss mit wellenförmigem Außenmantel,
- Fig. 3: einen Schraubverschluss mit konisch geformtem Außenmantel.

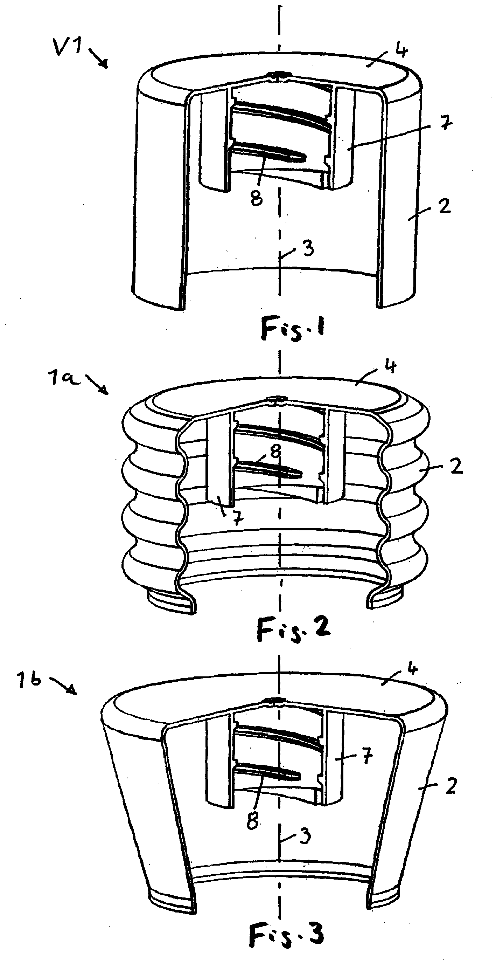

Die erfindungsgemäßen Schraubverschlüsse 1a bis 1b aus Kunststoff weisen einen Außenmantel 2 auf mit einer Zylinderachse 3, die in der Regel senkrecht steht, wenn der Schraubverschluss auf einen Behälter insbesondere eine Flasche aufgeschraubt wird. Der Außenmantel 2 ist an seiner Oberseite durch einen oberen Boden 4 verschlossen und an seiner Unterseite offen. In der Figur 1 ist der Schraubverschluss im noch unfertigen Zustand als Vorformling dargestellt, nachdem er im Kunststoffspritzgussverfahren hergestellt wurde und der innere Kern entfernt worden ist. In diesem Zustand weist der Innenraum des Vorformlings nach Fig. 1 über die gesamte Höhe denselben Durchmesser auf, so dass der Kern leicht herausgezogen werden kann.

Beim Vorformling V1 kann der Kern auch dann herausgezogen werden, wenn der obere Durchmesser etwas größer ist als der untere Durchmesser. Dies wird dadurch möglich, dass beim Entformen der Kunststoff noch so weich ist, dass ein Herausziehen des Kerns zu einem Zwangsentformen führt, oder dass der Kern ein Einfallkern oder ein Faltkern ist, siehe die eingangs genannten zwei Patentschriften.

In einer weiteren Alternative muss es vor dem Erweitern des Außenmantels 2 nicht unbedingt zu einem Entformen kommen, sondern ein Erweitern durch Aufblasen oder durch Unterdruck kann auch in der Spritzgussvorrichtung erfolgen.

Bei den in Fig. 2 und 3 dargestellten, doppelwandigen Schraubverschlüssen 1a und 1b besteht ein Außenmantel 2 und ein zylindrischer, koaxialer Innenmantel 7 mit Innengewinde 8, der bereits beim Vorformling V1 (Fig. 1) besteht. Dieser warme, formbare Vorformling V1 wird dann aufgeblasen und je nach Gestalt der Innenseite der Form erhält er durch das Aufblasen der Außenmantel 2 eine wellenförmige Kontur mit Hinterschnitten, wie dies Fig. 2 zeigt, oder eine sich konisch nach oben erweiternde Form, wie dies Fig. 3 zeigt.

Wie die Fig. 2 und 3 zeigen, können durch das Aufblasen die unterschiedlichsten Außenformen erreicht werden.

Der Vorformling V1 (Fig. 1) weist zum einen einen zylindrischen Außenmantel 2 auf. Der Außenmantel 2 des Vorformlings kann aber auch leicht konisch geformt sein, in dem er sich nach oben oder nach unten etwas verjüngt in Form eines geraden Kreiskegelstumpfes. Hierbei bildet die Mantellinie (Falllinie) des Mantels 2 bei einer Verjüngung nach oben einen spitzen Winkel α vom 1 bis 30 Grad mit der Kegelstumpfachse und einen spitzen Winkel α von 1 bis 10 Grad mit der Kegelstumpfachse bei einer Verjüngung nach unten.

## Patentansprüche

1. Verfahren zum Herstellen eines Schraub-oder Steckverschlusses (1a, 1b) aus Kunststoff zum Verschließen von Behältern,
wobei der Verschlusskörper einen Außenmantel (2) aufweist, der an seiner Oberseite verschlossen ist,
wobei zuerst im Kunststoffspritzgussverfahren der Verschlusskörper in Form einer topfförmigen Kappe mit Außenmantel (2) als Vorformling (V1) hergestellt wird, wobei im Kunststoffspritzguss ein Innengewinde (8) oder Rastsegmente auf der Innenseite einer koaxialen Innenbuchse (7) eingeformt wird,
**dadurch gekennzeichnet, dass**
nach dem Formen der Innenraum des Außenmantels (2) des Vorformlings (V1) erweitert wird durch Aufblasen und/oder durch Anlegen eines Unterdrucks an der Außenseite des Außenmantels (2).

2. Verfahren nach Anspruch 1, **dadurch gekennzeichnet, dass** der Außenmantel (2) des Vorformlings zylindrisch ist.

3. Verfahren nach Anspruch 1, **dadurch gekennzeichnet, dass** der Außenmantel (2) des Vorformlings sich nach unten oder nach oben hin konisch verjüngt und hierbei einen geraden Kreiskegelstumpf (3) bildet, bei einer Verjüngung nach oben mit einem Winkel (α) zwischen 0 und 30 Grad und bei einer Verjüngung nach unten mit einem Winkel (α) zwischen 0 und 10 Grad.

4. Verfahren nach einem der vorherigen Ansprüche, **dadurch gekennzeichnet, dass** nach dem Formen ein oberer Bereich des Außenmantels (2) soweit erweitert wird, dass ein Innendurchmesser des oberen Bereichs größer ist als der Innendurchmesser eines unterhalb des oberen Bereichs befindlichen unteren Bereichs.

5. Verfahren nach einem der vorherigen Ansprüche, **dadurch gekennzeichnet, dass** der Außenmantel (2) nach dem Formen eine sich nach oben konisch erweiternde Form aufweist.

6. Verfahren nach einem Ansprüche 1 bis 3, **dadurch gekennzeichnet, dass** der Außenmantel (2) nach dem Formen eine wellenförmig Kontur mit Hinterschnitten aufweist.

7. Verfahren nach einem der vorherigen Ansprüche, **dadurch gekennzeichnet, dass** das Entformen ein Zwangsentformen ist, bei dem während des Entfernens des Kerns der noch weiche Kunststoff des Außenmantels nachgibt.

8. Verfahren einem der vorherigen Ansprüche, **dadurch gekennzeichnet, dass** im Kunststoffspritzgussverfahren der obere Bereich durch einen Einfallkern oder Faltkern so weit erweitert wird, dass sein Innendurchmesser größer ist als der Innendurchmesser des unteren Bereichs und dass danach der obere Bereich durch Aufblasen und/oder äußerem Unterdruck darüber hinaus erweitert wird.

## Claims

1. Method for producing a screw or plug-in closure (1a, 1b) made of plastic for closing containers,
wherein the closure body has an outer casing (2) that is closed on its upper side,
wherein first the closure body is produced by the plastics injection moulding process in the form of a cup-shaped cap with an outer casing (2) as a preform (V1),
wherein, in the plastics injection moulding, an internal thread (8) or latching segments is/are moulded in on the inner side of a coaxial inner bushing (7),
**characterized in that**
after the moulding, the interior space of the outer casing (2) of the preform (V1) is expanded by being inflated and/or by a negative pressure being applied on the outside of the outer casing (2).

2. Method according to Claim 1, **characterized in that** the outer casing (2) of the preform is cylindrical.

3. Method according to Claim 1, **characterized in that** the outer casing (2) of the preform conically tapers downwardly or upwardly and thereby forms a straight truncated circular cone (3), comprising an upward taper with an angle (α) of between 0 and 30 degrees and comprising a downward taper with an angle (α) of between 0 and 10 degrees.

4. Method according to one of the preceding claims, **characterized in that**, after the moulding, an upper region of the outer casing (2) is expanded to the extent that an inside diameter of the upper region is greater than the inside diameter of a lower region located below the upper region.

5. Method according to one of the preceding claims, **characterized in that**, after the moulding, the outer casing (2) has an upwardly conically expanding form.

6. Method according to one of Claims 1 to 3, **characterized in that**, after the moulding, the outer casing (2) has a corrugated contour with undercuts.

7. Method according to one of the preceding claims, **characterized in that** the demoulding is a forced demoulding, in which the still soft plastic of the outer casing yields during the removal of the core.

8. Method according to one of the preceding claims, **characterized in that**, in the plastics injection moulding process, the upper region is expanded by a collapsible core to the extent that its inside diameter is greater than the inside diameter of the lower region and that after that the upper region is expanded further by being inflated and/or negative pressure on the outside.

## Revendications

1. Procédé de fabrication d'un bouchon à vis ou à encliquetage (1a, 1b) en plastique pour fermer des récipients,
le corps de bouchon présentant une enveloppe extérieure (2) qui est fermée au niveau de son côté supérieur,
le corps de bouchon étant d'abord fabriqué dans un procédé de moulage par injection de plastique sous la forme d'un capuchon en forme de pot avec une enveloppe extérieure (2) en tant que préforme (V1), un filetage intérieur (8) ou des segments d'encliquetage étant formé(s) au cours du moulage par injection de plastique sur le côté intérieur d'une douille intérieure coaxiale (7),
**caractérisé en ce**
**qu'**après le formage, l'espace intérieur de l'enveloppe extérieure (2) de la préforme (V1) est élargi par soufflage et/ou application d'une dépression sur le côté extérieur de l'enveloppe extérieure (2).

2. Procédé selon la revendication 1, **caractérisé en ce que** l'enveloppe extérieure (2) de la préforme est cylindrique.

3. Procédé selon la revendication 1, **caractérisé en ce que** l'enveloppe extérieure (2) de la préforme se rétrécit sous forme conique vers le bas ou vers le haut et forme ainsi un tronc de cône circulaire droit (3) avec un rétrécissement vers le haut suivant un angle (α) compris entre 0 et 30 degrés et avec un rétrécissement vers le bas suivant un angle (α) compris entre 0 et 10 degrés.

4. Procédé selon l'une quelconque des revendications précédentes, **caractérisé en ce qu'**après le formage, une région supérieure de l'enveloppe extérieure (2) est élargie dans une mesure telle qu'un diamètre intérieur de la région supérieure soit supérieur au diamètre intérieur d'une région inférieure se trouvant en dessous de la région supérieure.

5. Procédé selon l'une quelconque des revendications précédentes, **caractérisé en ce que** l'enveloppe extérieure (2) présente après le formage une forme s'élargissant sous forme conique vers le haut.

6. Procédé selon l'une quelconque des revendications 1 à 3, **caractérisé en ce que** l'enveloppe extérieure (2) présente après le formage un contour de forme ondulée avec des contre-dépouilles.

7. Procédé selon l'une quelconque des revendications précédentes, **caractérisé en ce que** le démoulage est un démoulage forcé au cours duquel, pendant l'enlèvement du noyau, le plastique encore mou de l'enveloppe extérieure cède.

8. Procédé selon l'une quelconque des revendications précédentes, **caractérisé en ce qu'**au cours du procédé de moulage par injection de plastique, la région supérieure est élargie par un noyau escamotable ou un noyau rétractable dans une mesure telle que son diamètre intérieur soit supérieur au diamètre intérieur de la région inférieure et **en ce qu'**ensuite la région supérieure est en outre élargie par soufflage et/ou dépression extérieure.
